# EUROPEAN PATENT APPLICATION

(11) **EP 4 417 645 A1**
(43) Date of publication of application: **21.08.2024**
(21) Application number: 22895523.3
(22) Date of filing: 10.11.2022
(51) Int. Cl.: C08K 9/04, C08L 63/00, C08L 83/04, C09K 5/14

(54) **INORGANIC FILLER AND HEAT DISSIPATION MEMBER**

(30) Priority: 17.11.2021 JP 2021186964
(71) Applicant: Denka Company Limited, Tokyo 103-8338 (JP)
(72) Inventor: WADA, Kosuke, Tokyo 103-8338 (JP); FUKAO, Kenji, Tokyo 103-8338 (JP); ONOZUKA, Masao, Tokyo 103-8338 (JP)
(74) Representative: Gulde & Partner
(86) International application number: PCT/JP2022/041856
(87) International publication number: WO 2023/090241

(57) **Abstract**

The inorganic filler of the present invention has a zeta potential of -15 mV or less at a pH of 7. The heat dissipation member of the present invention contains the inorganic filler of the present invention and a resin. The present invention can provide an inorganic filler that has good dispersibility in a resin, and a heat dissipation member containing the inorganic filler.

## Description

### Technical Field

The present invention relates to an inorganic filler and a heat dissipation member containing the inorganic filler.

### Background Art

In recent years, electric vehicles, such as electric cars, have been becoming widespread. A circuit board used in the on-board power system for an electric vehicle generally handles large voltage and current, and therefore generates a large amount of heat. The increase of the amount of heat generation may cause malfunction and failure of the circuit. Furthermore, the battery pack supplying electric power to the electric motor of the electric vehicle generates heat through repeated charging and discharging. The continuous use thereof at a high temperature may cause deterioration of the performance and the lifetime of the battery pack.

Additionally, these problems in heat generation occur not only in the electric vehicles, but also in electronic devices. The heat generation density inside the electronic device is increasing year by year due to the advance in capabilities and the reduction in size thereof, and there is an issue how to dissipate efficiently the heat generated during use.

A method has been used to remove the heat by bringing the heat generating part into contact with a cooling member although the details of the cooling mechanism may vary depending on the heat generating part. In this method, generally, the heat is removed by bringing the heat generating part into indirectly contact with the cooling member via a heat dissipation member since a gap between the heat generating member and the cooling member decreases the heat removal efficiency.

The heat dissipation member generally contains an inorganic filler in a resin. At this time, it is necessary to disperse the inorganic filler homogeneously in the resin. However, the inorganic filler tends to aggregate due to the attractive force (such as the van der Waals force) acting among the surfaces of the inorganic filler. Therefore, for dispersing the inorganic filler in the resin, for example, it is necessary to introduce a repulsive force to among the particles. Examples of the repulsive force include an electrostatic repulsive force and a steric hinderance repulsive force. Examples of the method of introducing a repulsive force to among the particles of the inorganic filler include a method of surface-treating the inorganic filler with a silane coupling agent (see, for example, PTL 1). The specific functional group is introduced to the surface of the inorganic filler with the silane coupling agent, and thereby the repulsive force among the inorganic filler can be enhanced.

### Citation List

### Patent Literature

PTL 1: JP 2000-233907 A

### Summary of Invention

### Technical Problem

However, an inorganic filler that has a stable surface, such as boron nitride, has a small amount of the functional group, such as an OH group, on the surface thereof. Therefore, an inorganic filler that has a stable surface, such as boron nitride, may be insufficient in modification of the surface of the inorganic filler with the silane coupling agent, and the inorganic filler cannot be sufficiently dispersed in the resin in some cases.

The present invention has been made in view of the problems described above, and an object thereof is to provide an inorganic filler that has good dispersibility in a resin, and a heat dissipation member containing the inorganic filler.

### Solution to Problem

The present inventors have made earnest investigations for solving the problems. As a result, it has been found that the problems can be solved by increasing the zeta potential of the inorganic filler to the negative side, and thus the present invention has been completed.

That is, the present invention is as follows.
[1] An inorganic filler having a zeta potential of -15 mV or less at a pH of 7.
[2] The inorganic filler according to the item [1], in which the inorganic filler has a specific surface area of 0.1 to 20 m²/g.
[3] The inorganic filler according to the item [1] or [2], in which the inorganic filler has an average particle diameter of 0.1 to 150 µm.
[4] The inorganic filler according to any one of the items [1] to [3], in which the inorganic filler contains a polymer having a (meth)acrylic based monomer unit A having an anionic group, a (meth)acrylic based monomer unit B having a cationic group, and a (meth)acrylic based monomer unit C other than the (meth)acrylic based monomer unit A and the (meth)acrylic based monomer unit B, and has a content of the polymer of 0.01 to 10% by mass.
[5] The inorganic filler according to any one of the items [1] to [4], in which the inorganic filler contains at least one kind of an inorganic filler selected from the group consisting of aluminum oxide and boron nitride.
[6] A heat dissipation member containing the inorganic filler according to any one of the items [1] to [5], and a resin.
[7] The heat dissipation member according to the item [6], in which the resin is at least one kind of a resin selected from the group consisting of a silicone resin and an epoxy resin.
[8] The heat dissipation member according to the item [6] or [7], in which the heat dissipation member is a heat dissipation sheet.

### Advantageous Effects of Invention

The present invention can provide an inorganic filler that has good dispersibility in a resin, and a heat dissipation member containing the inorganic filler.

### Description of Embodiments

While an embodiment of the present invention (which may be hereinafter referred to as a "present embodiment") will be described in detail below, the present invention is not limited thereto, and various modifications can be made therein within a range that does deviate from the substance thereof.

### [Inorganic Filler]

### (Zeta Potential)

The zeta potential of the inorganic filler of the present embodiment is -15 mV or less at a pH of 7. In the case where the zeta potential of the inorganic filler is larger than -15 mV at a pH of 7, the electrostatic repulsive force acting among the surfaces of the inorganic filler is weak, and thereby the inorganic filler is easily aggregated, resulting in difficulty for homogeneous dispersion of the inorganic filler in a resin in some cases. From this standpoint, the zeta potential at a pH of 7 of the inorganic filler is preferably -18 mV or less, and more preferably -20 mV or less. The lower limit value of the range of the zeta potential at a pH of 7 of the inorganic filler of the present embodiment is not particularly limited, and is generally -50 mV or more. The zeta potential at a pH of 7 of the inorganic filler can be measured by the method shown in the examples described later.

### (Specific Surface Area)

The specific surface area of the inorganic filler of the present embodiment is preferably 0.1 to 20 m²/g, more preferably 0.2 to 15 m²/g, and further preferably 0.3 to 12 m²/g. In the case where the specific surface area of the inorganic filler is 0.1 m²/g or more, the electrostatic repulsive force acting among the surfaces of the inorganic filler is increased, and the inorganic filler can be further prevented from being aggregated. In the case where the specific surface area of the inorganic filler is 20 m²/g or less, the attractive force (such as the van der Waals force) acting among the surfaces of the inorganic filler is decreased, and the inorganic filler can be further prevented from being aggregated. The specific surface area of the inorganic filler can be measured by the method shown in the examples described later.

### (Average Particle Diameter)

The average particle diameter of the inorganic filler of the present embodiment is preferably 0.1 to 150 µm, more preferably 0.5 to 125 µm, and further preferably 1.0 to 100 µm. In the case where the average particle diameter of the inorganic filler is 0.1 µm or more, the thermal conductivity and the oil bleeding resistance can be improved. In the case where the average particle diameter thereof is 150 µm or less, the moldability of a composition having the inorganic filler filled therein can be improved. The average particle diameter of the inorganic filler can be measured by the method shown in the examples described later.

The inorganic filler of the present embodiment may be a mixture of inorganic fillers having multiple average particle diameters, as long as the average particle diameter of the entire inorganic filler is in the range described above. As compared to the case where an inorganic filler having a single average particle diameter is used, the combination use with an inorganic filler having a smaller average particle diameter enables that the gaps among the inorganic filler having a larger diameter are filled with the inorganic filler having a smaller diameter. Therefore, the use of the mixture of inorganic fillers having multiple average particle diameters enables the higher density filling of the inorganic filler in the resin composition. In the case where an inorganic filler is filled in a higher density in this manner, in general, there may be problems that the viscosity is considerably increased to deteriorate the handleability, and the inorganic filler cannot be homogeneously dispersed. On the other hand, the use of the inorganic filler having a zeta potential of -15 mV or less at a pH of 7 can prevent the problems caused by the higher density filling. Consequently, the thermal conductivity, which is enhanced depending on the amount of the inorganic filler filled therein, can be further enhanced.

### (Kind of Inorganic Filler)

Examples of the inorganic filler of the present embodiment include an inorganic filler having high thermal conductivity while not particularly limited. Examples of the inorganic filler include one or more kind selected from boron nitride powder, aluminum nitride powder, aluminum oxide powder, silicon nitride powder, silicon oxide powder, magnesium oxide powder, metallic aluminum powder, and zinc oxide powder. Among these, boron nitride powder and aluminum oxide powder are preferred, and boron nitride powder is more preferred. The use of such an inorganic filler provides a tendency of further enhancing the thermal conductivity of the heat dissipation member. Further, the zeta potential at a pH of 7 of the inorganic filler that is -15 mV or less enables higher density filling of the inorganic filler in the heat dissipation member, and thereby can further enhance the thermal conductivity thereof, which is enhanced depending on the amount of the inorganic filler filled therein.

### (Copolymer)

The inorganic filler of the present embodiment contains a polymer having a (meth)acrylic based monomer unit A having an anionic group, a (meth)acrylic based monomer unit B having a cationic group, and a (meth)acrylic based monomer unit C other than the (meth)acrylic based monomer unit A and the (meth)acrylic based monomer unit B, and has a content of the polymer of 0.01 to 10% by mass, and thereby the zeta potential at a pH of 7 thereof can be easily a value of -15 mV or less. It is considered that the copolymer is adsorbed to the inorganic filler, and the anionic group of the copolymer adsorbed on the inorganic filler allows the zeta potential of the inorganic filler to be -15 mV or less.

In the present embodiment, the (meth)acrylic based monomer unit means both a methacrylic acid based monomer unit and an acrylic based monomer unit. In addition, the "monomer" means a monomer having a polymerizable unsaturated bond before polymerization, and the "monomer unit" means a repeating unit constituting a part of a copolymer after polymerization, derived from a prescribed monomer. In the following description, the "(meth)acrylic based monomer unit A" may also be referred simply to as a "unit A", the "(meth)acrylic based monomer unit B" may also be referred simply to as a "unit B", and the "(meth)acrylic based monomer unit C" may also be referred simply to as a "unit C".

### ((Meth)acrylic based Monomer Unit A having Anionic Group)

The (meth)acrylic based monomer unit A is a repeating unit having an anionic group. Examples of the anionic group include a carboxy group, a phosphate group, a phenolic hydroxy group, and a sulfonate group, while not particularly limited. Among these, one or more kind selected from the group consisting of a carboxy group, a phosphate group, and a phenolic hydroxy group is preferred, and a carboxy group is more preferred. Such a group contained increases the zeta potential of the inorganic filler to the negative side to increase the electrostatic repulsive force of the inorganic filler, and thus the dispersibility of the inorganic filler is further enhanced.

Further, the unit A preferably further has an electron withdrawing group bonded to the anionic group. The electron withdrawing group is not particularly limited, as long as having a function of stabilizing the anion of the anionic group. For example, an acrylic based monomer containing an electron withdrawing substituent, such as a halogen element, on the carbon atom at the α-position of the carboxy group may be used. Such a group provides a tendency of further enhancing the dispersibility of the inorganic filler.

It is preferred that the unit A does not have an electron donating group bonded to the anionic group, or has a group having a low electron donating capability bonded thereto. The electron donating group is not particularly limited, as long as having a function of destabilizing the anion of the anionic group. For example, an acrylic based monomer that does not contain an electron donating group, such as a methyl group, as a substituent on the carbon atom at the α-position of the carboxy group may be used. Such a structure provides a tendency of further enhancing the dispersibility of the inorganic filler.

Examples of the (meth)acrylic based monomer include acrylic acid, methacrylic acid, acid phosphoxypropyl methacrylate, acid phosphoxypolyoxyethylene glycol monomethacrylate, acid phosphoxypolyoxypropylene glycol monomethacrylate, phosphoric acid-modified epoxy acrylate, 2-acryloyloxyethyl acid phosphate, 2-methacryloyloxyethyl acid phosphate, 4-hydroxyphenyl acrylate, 4-hydroxyphenyl methacrylate, 2-methacryloyloxyethylsuccinic acid, and 2-acrylamido-2-methylpropanesulfonic acid, while not particularly limited. Among these, acrylic acid, 2-methacryloyloxyethyl acid phosphate, 4-hydroxyphenyl methacrylate, and 2-acrylamido-2-methylpropanesulfonic acid are preferred, and acrylic acid is more preferred. The unit derived from such a monomer contained provides a tendency of further enhancing the affinity of the copolymer to the inorganic filler, and further enhancing the dispersibility of the inorganic filler. One kind of the unit A may be used alone, or two or more kinds thereof may be used in combination.

### ((Meth)acrylic based Monomer Unit B having Cationic Group)

The (meth)acrylic based monomer unit B is a repeating unit having a cationic group. The cationic group is preferably one or more kind selected from the group consisting of a primary amino group, a secondary amino group, a tertiary amino group, and a quaternary ammonium salt, while not particularly limited. Among these, a tertiary amino group is more preferred. Such a group contained allows the copolymer to be easily adsorbed to the inorganic filler, and thus the dispersibility of the inorganic filler is further enhanced.

The unit B preferably further has an electron donating group bonded to the cationic group. The electron donating group is not particularly limited, as long as having a function of stabilizing the cation of the cationic group. For example, an acrylic based monomer containing an electron donating substituent, such as a methyl group, on the carbon atom at the α-position of the amino group may be used. Such a group provides a tendency of further enhancing the dispersibility of the inorganic filler.

It is preferred that the unit B does not have an electron withdrawing group bonded to the cationic group, or has a group having a low electron withdrawing capability bonded thereto. The electron withdrawing group is not particularly limited, as long as having a function of destabilizing the cation of the cationic group. For example, an acrylic based monomer that does not contain an electron withdrawing group, such as a carboxyl group, as a substituent on the carbon atom at the α-position of the amino group may be used. Such a structure provides a tendency of further enhancing the dispersibility of the inorganic filler.

Examples of the (meth)acrylic based monomer include 1-aminoethyl acrylate, 1-aminopropyl acrylate, 1-aminoethyl methacrylate, 1-aminopropyl methacrylate, dimethylaminoethyl methacrylate, diethylaminoethyl methacrylate, t-butylaminoethyl (meth)acrylate, dimethylaminoethyl methacrylate quaternary salt, 1,2,2,6,6-pentamethyl-4-piperidyl methacrylate, 2,2,6,6-tetramethyl-4-piperidyl methacrylate, and dimethylaminoethyl acrylate benzyl chloride quaternary salt, while not particularly limited. Among these, 1,2,2,6,6-pentamethyl-4-piperidyl methacrylate and 2,2,6,6-tetramethyl-4-piperidyl methacrylate are preferred, and 1,2,2,6,6-pentamethyl-4-piperidyl methacrylate is more preferred. The unit derived from such a monomer contained provides a tendency of further enhancing the affinity of the copolymer to the inorganic filler, and further enhancing the dispersibility of the inorganic filler. One kind of the unit B may be used alone, or two or more kinds thereof may be used in combination.

### ((Meth)acrylic based Monomer Unit C)

The (meth)acrylic based monomer unit C is a (meth)acrylic based monomer unit other than the unit A and the unit B, and is a (meth)acrylic based monomer that does not contain a cationic group and an anionic group in the molecule thereof. The (meth)acrylic based monomer unit C contained in the copolymer increases the steric hinderance repulsive force of the inorganic filler, and improves the dispersibility of the inorganic filler.

Assuming that the copolymer of the present embodiment is mixed in a resin composition containing a thermoplastic resin or a thermosetting resin, the (meth)acrylic based monomer C preferably has a skeleton that has high affinity or compatibility with the resin used in the resin composition. Examples of the skeleton include an amphiphilic skeleton, such as an oxyalkylene skeleton, a hydrophobic skeleton, such as a siloxane skeleton, e.g., dimethylsiloxane, and a hydrocarbon skeleton, e.g., an alkyl and an aryl, and a hydrophilic skeleton, such as a phosphate diester skeleton, while not particularly limited. Among these, an oxyalkylene skeleton, a siloxane skeleton, and a hydrocarbon skeleton are preferred, a siloxane skeleton and a hydrocarbon skeleton are more preferred, and a siloxane skeleton is further preferred. Such a skeleton contained provides a tendency of further enhancing the compatibility between the copolymer of the present embodiment and the resin, and further enhancing the dispersibility of the inorganic filler in the resin composition.

Examples of the (meth)acrylic based monomer include a (meth)acrylic based monomer having an oxyalkylene skeleton, such as ethoxycarbonylmethyl (meth)acrylate, phenol ethylene oxide-modified (meth)acrylate, phenol (2-mol ethylene oxide-modified) (meth)acrylate, phenol (4-mol ethylene oxide-modified) (meth)acrylate, p-cumylphenol ethylene oxide-modified (meth)acrylate, nonylphenol ethylene oxide-modified (meth)acrylate, nonylphenol (4-mol ethylene oxide-modified) (meth)acrylate, nonylphenol (8-mol ethylene oxide-modified) (meth)acrylate, nonylphenol (2.5-mol propylene oxide-modified) acrylate, 2-ethylhexylcarbitol (meth)acrylate, ethylene oxide-modified phthalic (meth)acrylate, ethylene oxide-modified succinic (meth)acrylate, and tetrahydrofurfuryl (meth)acrylate; a (meth)acrylic based monomer in which the ester part thereof has an hydrocarbon skeleton, such as methyl (meth)acrylate, ethyl (meth)acrylate, propyl (meth)acrylate, butyl (meth)acrylate, 2-ethylhexyl (meth)acrylate, isooctyl (meth)acrylate, isodecyl (meth)acrylate, lauryl (meth)acrylate, stearyl (meth)acrylate, phenyl (meth)acrylate, cyclohexyl (meth)acrylate, dicyclopentanyl (meth)acrylate, dicyclopentenyl (meth)acrylate, dicyclopentenyloxyethyl (meth)acrylate, isobornyl (meth)acrylate, and methoxylated cyclodecatriene (meth)acrylate; a (meth)acrylic based monomer having a hydroxy group, such as 2-hydroxyethyl (meth)acrylate, 2-hydroxypropyl (meth)acrylate, 3-hydroxypropyl (meth)acrylate, 4-hydroxypropyl (meth)acrylate, 2-hydroxy-3-phenoxypropyl (meth)acrylate, and 3-chloro-2-hydroxypropyl (meth)acrylate; a (meth)acrylic based monomer having an amide bond, such as N,N-dimethyl(meth)acrylamide, N,N-diethyl(meth)acrylamide, N-isopropyl(meth)acrylamide, diacetone(meth)acrylamide, and acryloylmorpholine; a (meth)acrylic based monomer having a siloxane skeleton, such as α-butyl-ω-(3-methacryloxypropyl)polydimethylsiloxane; a (meth)acrylic based monomer having a phosphate diester skeleton, such as a (meth)acryloyloxyethyl dialkylphosphate; and a polyfunctional (meth)acrylic based monomer, such as 1,3-butylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dicyclopentanyl di(meth)acrylate, 2-ethyl-2-butylpropanediol (meth)acrylate, neopentyl glycol-modified trimethylolpropane di(meth)acrylate, stearic acid-modified pentaerythritol di(meth)acrylate, 2-(1,2-cyclohexacarboxyimide)ethyl (meth)acrylate, hexanediol di(meth)acrylate, a polyfunctional (meth)acrylate having a bisphenol structure, while not particularly limited. One kind of the unit C may be used alone, or two or more kinds thereof may be used in combination. Among these, a (meth)acrylic based monomer having a siloxane skeleton, such as α-butyl-ω-(3-methacryloxypropyl)polydimethylsiloxane, is preferred.

The weight average molecular weight of the (meth)acrylic based monomer C is preferably 2,000 to 9,000. In the case where the weight average molecular weight of the (meth)acrylic based monomer C is 2,000 or more, the affinity of the copolymer to the resin is further improved, and the steric hindrance repulsive force of the inorganic filler is increased, thereby improving the dispersibility of the inorganic filler. In the case where the weight average molecular weight of the (meth)acrylic based monomer C is 9,000 or less, the copolymer can be more easily dissolved in the resin and the solvent. From this standpoint, the weight average molecular weight of the (meth)acrylic based monomer C is more preferably 2,500 to 7,000, further preferably 3,000 to 6,000, and still further preferably 3,500 to 5,500. Note that the weight average molecular weight of the (meth)acrylic based monomer C is the weight average molecular weight of the (meth)acrylic based monomer unit C.

The content of the unit A is preferably 30 to 80% by mol, and more preferably 40 to 65% by mol, based on 100% by mol in total of the unit A, the unit B, and the unit C. In the case where the content of the unit A is 30% by mol or more, the zeta potential of the inorganic filler is increased to the negative side, and the dispersibility of the inorganic filler is further enhanced. In the case where the content of the unit A is 80% by mol or less, the unit B and the unit C can be contained in the copolymer in the sufficient contents.

The content of the unit B is preferably 0.1 to 5% by mol, and more preferably 0.5 to 3% by mol, based on 100% by mol in total of the unit A, the unit B, and the unit C. In the case where the content of the unit B is 0.1% by mol or more, the adsorbability of the copolymer to the inorganic filler is improved, and the dispersibility of the inorganic filler is further enhanced. In the case where the content thereof is 5% by mol or less, the unit A and the unit C can be contained in the copolymer in the sufficient contents.

The total content of the unit A and the unit B is preferably 30.1 to 85% by mol, and more preferably 35 to 75% by mol, based on 100% by mol in total of the unit A, the unit B, and the unit C. In the case where the total content of the unit A and the unit B is 30.1% by mol or more, the dispersibility of the inorganic filler is further enhanced. In the case where the total content of the unit A and the unit B is 85% by mol or less, the unit C can be contained in the copolymer in the sufficient content.

The molar ratio of the unit A to the unit B is preferably 6 to 800, and more preferably 20 to 400. In the case where the molar ratio of the unit A to the unit B is in the range, there is a tendency of further enhancing the dispersibility of the inorganic filler.

The content of the unit C is preferably 20 to 70% by mol, and more preferably 30 to 55% by mol, based on 100% by mol in total of the unit A, the unit B, and the unit C. In the case where the content of the unit C is 20% by mol or more, the handleability derived from the viscous behavior of the copolymer is improved. In the case where the content thereof is 70% by mol or less, the unit A and the unit B can be contained in the copolymer in the sufficient contents.

The weight average molecular weight of the copolymer is preferably 40,000 to 80,000, and more preferably 50,000 to 70,000. In the case where the weight average molecular weight of the copolymer is 40,000 or more, the inorganic filler is further unlikely aggregated through the steric hinderance repulsive force of the copolymer, and the dispersibility of the inorganic filler in the resin composition is further improved. In the case where the weight average molecular weight of the copolymer is 80,000 or less, the copolymer can be further easily dissolved in a resin and a solvent. The weight average molecular weight can be obtained by GPC (gel permeation chromatography).

The copolymer is preferably a copolymer represented by the following general formula (1). The copolymer represented by the general formula (1) may be either a random copolymer or a block copolymer. Note that the unit A in the copolymer represented by the following general formula (1) is derived from acrylic acid, and the anionic group is a carboxy group. Further, the unit B in the copolymer represented by the following general formula (1) is derived from 1,2,2,6,6-pentamethyl-4-piperidyl methacrylate, and the cationic group is a tertiary amino group. Furthermore, the unit C in the copolymer represented by the following general formula (1) is derived from α-butyl-ω-(3-methacryloxypropyl)polydimethylsiloxane, and has a siloxane skeleton. 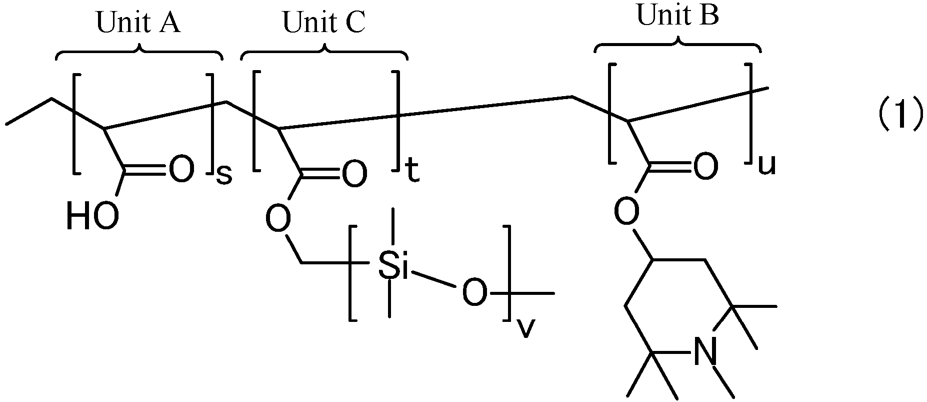 In the formula, s represents an integer that provides a content of the unit A of 30 to 80% by mol, based on 100% by mol in total of the unit A, the unit B, and the unit C, in the case where the weight average molecular weight of the copolymer is 40,000 to 80,000, t represents an integer that provides a content of the unit C of 20 to 70% by mol, based on 100% by mol in total of the unit A, the unit B, and the unit C, in the case where the weight average molecular weight of the copolymer is 40,000 to 80,000, u represents an integer that provides a content of the unit B of 0.1 to 5.0% by mol, based on 100% by mol in total of the unit A, the unit B, and the unit C, in the case where the weight average molecular weight of the copolymer is 40,000 to 80,000, and v represents an integer that provides a weight average molecular weight of the unit C of 2,000 to 9,000.

The copolymer has a large number of anchoring parts adsorbing to the inorganic filler due to the relatively large weight average molecular weight thereof, and therefore has good adsorbability to an inorganic filler having a stable surface with poor reactivity, such as boron nitride. Therefore, the copolymer can sufficiently improve the dispersibility the inorganic filler having a stable surface, such as boron nitride, and thus can be more favorably used for a surface treatment of the inorganic filler having a stable surface, such as boron nitride.

### (Production Method of Copolymer)

The production method of the copolymer is not particularly limited, and a known polymerization method of a (meth)acrylic based monomer can be used. Examples of the polymerization method include radical polymerization and anionic polymerization. Among these, radical polymerization is preferred.

Examples of the thermal polymerization initiator used in the radical polymerization include an azo compound, such as azobisisobutyronitrile; and an organic peroxide, such as benzoyl peroxide, tert-butyl hydroperoxide, and di-tert-butyl peroxide, while not particularly limited. Additionally, examples of the photopolymerization initiator used in the radical polymerization include a benzoin derivative while not particularly limited. A known polymerization initiator used in living radical polymerization, such as ATRP and RAFT, may also be used.

The polymerization condition is not particularly limited, and may be appropriately regulated in consideration of the initiator used, the boiling point of the solvent, and the kinds of the monomers used.

The addition order of the monomers is not particularly limited, and for example, the monomers may be mixed and then polymerized from the standpoint of synthesizing a random copolymer, or the monomers may be sequentially added to the polymerization system from the standpoint of synthesizing a block copolymer.

The content of the copolymer in the inorganic filler is preferably 0.01 to 10% by mass, more preferably 0.05 to 8% by mass, and further preferably 0.10 to 6% by mass. In the case where the content of the copolymer in the inorganic filler is 0.01% by mass or more, the zeta potential at a pH of 7 of the inorganic filler can be easily allowed to be -15 mV or less. In the case where the content of the copolymer is 10% by mass or less, the decrease of the thermal conductivity coefficient of the inorganic filler due to the increase of the content of the copolymer can be prevented.

### [Heat Dissipation Member]

The heat dissipation member of the present embodiment contains the inorganic filler of the present embodiment and a resin, and may contain an optional additive depending on necessity. In the heat dissipation member of the present embodiment, the inorganic filler can be homogeneously dispersed in the resin due to the use of the inorganic filler of the present embodiment, and as a result, the inorganic filler can be contained in a high filling density in the heat dissipation member, resulting in the further enhancement of the thermal conductivity coefficient of the heat dissipation member.

The content of the inorganic filler is preferably 45 to 90% by volume, and more preferably 55 to 85% by volume, based on 100% by volume in total of the content of the inorganic filler and the resin. In the case where the content of the inorganic filler is 45% by volume or more, there is a tendency of further enhancing the thermal conductivity of the heat dissipation member. In the case where the content of the inorganic filler is 90% by volume or less, the dispersibility of the inorganic filler in the heat dissipation member is improved.

Examples of the resin include a thermosetting resin, such as a silicone resin, an epoxy resin, a phenol resin, a cyanate resin, a melamine resin, a urea resin, a thermosetting polyamide, and an unsaturated polyester resin; and a thermoplastic resin, such as an acrylic resin, a polyolefin resin, a polycarbonate resin, a polyester resin, a vinyl chloride resin, a urethane resin, a polyamide resin, and an ABS (acrylonitrile-butadiene-styrene) resin, while not particularly limited. Among these, one or more kind of a resin selected from the group consisting of a silicone resin and an epoxy resin is preferred.

Examples of the optional additive include a silane coupling agent, an antioxidant, and a metal corrosion inhibitor, while not particularly limited.

The heat dissipation member of the present embodiment can be produced in such a manner that the inorganic filler and the resin are kneaded with a planetary agitator, a universal mixer-agitator, a kneader, a hybrid mixer, or the like, so as to provide a resin composition, which is then molded.

The heat dissipation member of the present embodiment is disposed, for example, between an electronic component and a heatsink. According to the configuration, a gap can be prevented from occurring between the electronic component and the heatsink. As a result, the heat generated by the electronic component can be efficiently transferred to the heatsink.

Examples of the electronic component include a circuit board used in a motor, a battery pack, and an in-vehicle power supply system, and a heat-generating electronic component, such as a power transistor and a microprocessor, while not particularly limited. Among these, an electronic component used in an in-vehicle power supply system is preferred. The heatsink is not particularly limited, as long as being a component constituted for the purpose of dissipating or absorbing heat.

### (Heat Dissipation Sheet)

The heat dissipation member of the present embodiment is not particularly limited as long as containing the inorganic filler of the present embodiment and a resin, and is preferably a heat dissipation sheet. The thermal conductivity coefficient of the heat dissipation sheet can be enhanced by using the inorganic filler of the present embodiment. The heat dissipation sheet can be produced, for example, by molding a resin composition slurry containing the inorganic filler of the present embodiment, a resin, and a solvent, into a sheet by the doctor blade method.

### Examples

The present invention will be described more specifically with reference to examples and comparative examples below. The present invention is not limited to the examples.

### <Monomers for preparing Copolymers>

The following materials were used for polymerizing the copolymers of the examples.

### ((Meth)acrylic based Monomer A having Anionic Group)

(A-1) Acrylic acid, available from Toagosei Co., Ltd.

### ((Meth)acrylic based Monomer B having Cationic Group)

(B-1) 1,2,2,6,6-Pentamethyl-4-piperidyl methacrylate, "Adeka Stab LA-82", available from Adeka Corporation

### (Meth)acrylic based Monomer C)

(C-1) α-Butyl-ω-(3-methacryloxypropyl)polydimethylsiloxane, "Silaplane FM-0721", available from JNC Corporation, weight average molecular weight: 5,000
(C-2) α-Butyl-ω-(3-methacryloxypropyl)polydimethylsiloxane, "Silaplane FM-0725", available from JNC Corporation, weight average molecular weight: 10,000

### <Preparation of Copolymers>

### (Copolymer 1)

The copolymer was prepared in the following manner. 100 parts by mass of a (meth)acrylic based monomer containing 48.4% by mol of acrylic acid, 1.6% by mol of 1,2,2,6,6-pentamethyl-4-piperidyl methacrylate, 50.0% by mol of α-butyl-ω-(3-methacryloxypropyl)polydimethylsiloxane (weight average molecular weight: 5,000) was placed in an autoclave equipped with an agitator. Subsequently, 0.05 part by mass of azobisisobutyronitrile (available from Tokyo Kasei Kogyo Co., Ltd.) as an initiator and 1,000 parts by mass of a mixed solution of toluene (guaranteed reagent) and 2-propanol (guaranteed reagent) at a volume ratio of 7/3 as a solvent per 100 parts by mass in total of the (meth)acrylic based monomers were added thereto, and the interior of the autoclave was purged with nitrogen. Thereafter, radical polymerization was performed by heating the autoclave to 65°C for 20 hours in an oil bath. After completing the polymerization, the interior was evacuated under reduced pressure at 120°C for 1 hour to provide a copolymer 1. The weight average molecular weight of α-butyl-ω-(3-methacryloxypropyl)polydimethylsiloxane was 5,000, and thus the weight average molecular weight of the unit C was 5,000.

The polymerization degree with respect to 100% of the charged amount of the monomers analyzed by gas chromatography was 98% or more. It was estimated therefrom that the ratio of the monomer units of the copolymer was equivalent to the charged ratio of the monomers.

The weight average molecular weight of the resulting copolymer 1 was obtained in terms of standard polystyrene conversion weight average molecular weight by the GPC (gel permeation chromatography) method. Note that the measurement condition was as follows.
High-speed GPC device: "HLC-8020", available from Tosoh Corporation
Columns: "TSK Guardcolumn MP(XL)" 6.0 mmm ID × 4.0 cm, available from Tosoh Corporation, × 1, and "TSK-Gelmultipore HXL-M" 7.8 mm ID × 30.0 cm (theoretical plate number: 16,000), available from Tosoh Corporation, × 2, i.e., three columns in total (total theoretical plate number: 32,000)
Developing solvent: tetrahydrofuran
Detector: RI (differential refractive index detector)

### (Copolymer 2)

Radical polymerization was performed in the same manner as in the copolymer 1 except that in the (meth)acrylic based monomers, the proportion of the acrylic acid was changed from 48.4% by mol to 67.7% by mol, the weight average molecular weight of 1,2,2,6,6-pentamethyl-4-piperidyl methacrylate was changed from 5,000 to 10,000, the proportion of 1,2,2,6,6-pentamethyl-4-piperidyl methacrylate was changed from 1.6% by mol to 2.3% by mol, and the proportion of α-butyl-ω-(3-methacryloxypropyl)polydimethylsiloxane was changed from 50.0% by mol to 30.0% by mol, so as to provide a copolymer 2. The polymerization degree of the resulting copolymer 2 was 98% or more, from which it was estimated that the ratio of the monomer units of the copolymer was equivalent to the charged ratio of the monomers. Further, the weight average molecular weight was obtained in the same manner as above. Note that the weight average molecular weight of α-butyl-ω-(3-methacryloxypropyl)polydimethylsiloxane was 10,000, and thus the weight average molecular weight of the unit C was 10,000.

### (Copolymer 3)

A high-molecular weight amine compound ("Esleam AD-374M", available from NOF Corporation) was used as a copolymer 3.

Note that the compositions of the monomers shown in Table 1 are shown in terms of molar ratio (%). The molar ratio was calculated based on the addition amount and the molecular weight of each of the monomers. In addition, the molar ratio of α-butyl-ω-(3-methacryloxypropyl)polydimethylsiloxane was calculated based on the weight average molecular weight.

The compositions and the weight average molecular weights of the copolymers 1 and 2 synthesized as above are shown in Table 1.

### <Production of surface-treated Inorganic Filler>

### (Inorganic Filler 1)

2 parts by mass of boron nitride ("FP40", available from Denka Co., Ltd., average particle diameter: 40 µm), 40 parts by mass of a silicone oil ("KF-96L-0.65CS", available from Shin-Etsu Chemical Co., Ltd., boiling point: 100°C), and 2 parts by mass of the copolymer 1 were placed in a beaker having a stirring chip disposed therein, and agitated for 30 minutes. Thereafter, the boron nitride was filtered with a coffee filter. The boron nitride was then dried in a dryer at a temperature of 80°C for 18 hours to provide an inorganic filler 1.

### (Inorganic Filler 2)

An inorganic filler 2 was obtained in the same manner as in the inorganic filler 1 except that the amount of the copolymer 1 blended was changed from 2 parts by mass to 5 parts by mass.

### (Inorganic Filler 3)

An inorganic filler 3 was obtained in the same manner as in the inorganic filler 1 except that the copolymer 1 was changed to the copolymer 2.

### (Inorganic Filler 4)

An inorganic filler 3 was obtained in the same manner as in the inorganic filler 1 except that the copolymer 1 was changed to the copolymer 3.

### (Inorganic Filler 5)

The boron nitride that was not subjected to the surface treatment was used as an inorganic filler 5.

The properties of the inorganic filler were measured in the following manner.

### (Zeta Potential)

The zeta potential of the inorganic filler was measured by electrophoresis. Note that the electrophoresis speed was measured by the Laser Doppler method.

### (1) Preparation of Measurement Specimen

0.005 part by mass of the inorganic filler, 25 parts by mass of ion exchanged water, and 0.015 part by mass of NaCl were mixed to prepare a measurement specimen having a pH of 7 (6.98 to 7.02). Note that the pH of the measurement specimen was measured with a pH meter ("pH Meter D-51 ", available from Horiba, Ltd.).

### (2) Measurement of Zeta Potential

The zeta potential of the inorganic filler was measured with a zeta potential analyzer ("ELS-Z2", available from Otsuka Electronics Co., Ltd.) according to the following procedure.
(i) After checking the light intensity of the analyzer, the analyzer was regulated in such a manner that the peak of the light intensity was positioned at a zeta potential of 0 mV.
(ii) The measurement specimen was charged in the electrophoresis cell.
(iii) The measurement parameters (i.e., the refractive index, the viscosity coefficient, and the permeability of water) were input to the analyzer.
(iv) A voltage was applied, and then the measurement was started.

Note that the measurement condition was as follows.
Measurement temperature: 25°C
Applied voltage: 60 V
Cumulated number: 5

### (Specific Surface Area)

The specific surface area of the inorganic filler was measured by the BET 1-point method with a specific surface area analyzer (Quantasorb, available from Yuasa Ionics Co., Ltd.). Note that, in the measurement, 1 g of a specimen was dried and deaerated at 300°C for 15 minutes, and then measured.

### (Average Particle Diameter)

The average particle diameter of the inorganic filler was measured with "Laser Diffraction Particle Size Distribution Analyzer SALD-20", available from Shimadzu Corporation. An evaluation specimen was prepared in such a manner that 50 mL of pure water and 5 g of the inorganic filler to be measured were placed in a glass beaker, which were agitated with a spatula, and then subjected to a dispersion treatment with an ultrasonic bath for 10 minutes. The dispersion liquid of the inorganic filler obtained through the dispersion treatment was added to the sampler of the analyzer drop by drop, and the measurement was performed after the absorbance was stabilized. The average particle diameter was in terms of D50 (median diameter).

<Production of Heat Dissipation Sheet>

### (Heat Dissipation Sheet 1)

50% by volume of the inorganic filler 1 and 50% by volume of a silicone resin (obtained by mixing a main agent (available from Momentive Performance Materials, Inc., "TSE3033(A)", a trade name) and a curing agent (available from Momentive Performance Materials, Inc., "TSE3033(B)", a trade name) at 1/1 (mass ratio)) based on 100% by volume in total of the inorganic filler and the silicone resin, and 50 parts by mass of toluene per 100 parts by mass in total of the materials described above were placed in an agitator (available from Heidon (Shinto Scientific Co., Ltd.), "Three-One Motor"), and mixed with a turbine blade for 15 hours to produce a slurry of a resin composition.

The slurry was coated to a thickness of 0.5 mm on a PET film (carrier film) having a thickness of 0.05 mm by the doctor blade method, and dried at 75°C for 5 minutes to produce a sheet-like molded article with a PET film. Another PET film was laminated on the surface of the resin composition of the sheet-like molded article to produce a laminate. The resulting laminate was heated and pressed in vacuum (pressure: 3.5 kPa) under conditions of a temperature of 150°C and a pressure of 15 MPa for 1 hour, and the PET films on both sides were released off to provide a sheet having a thickness of 0.3 mm. Subsequently, the sheet was secondarily heated under ordinary pressure to 150°C for 4 hours to provide a heat dissipation sheet 1.

### (Heat Dissipation Sheet 2)

A heat dissipation sheet 2 was produced in the same manner as in the heat dissipation sheet 1 except that the inorganic filler 2 was used instead of the inorganic filler 1.

### (Heat Dissipation Sheet 3)

A heat dissipation sheet 3 was produced in the same manner as in the heat dissipation sheet 1 except that the inorganic filler 3 was used instead of the inorganic filler 1.

### (Heat Dissipation Sheet 4)

A heat dissipation sheet 4 was produced in the same manner as in the heat dissipation sheet 1 except that the inorganic filler 4 was used instead of the inorganic filler 1.

### (Heat Dissipation Sheet 5)

A heat dissipation sheet 5 was produced in the same manner as in the heat dissipation sheet 1 except that the inorganic filler 5 was used instead of the inorganic filler 1.

The properties of the heat dissipation sheet were measured in the following manner.

### (Dispersibility of Inorganic Filler)

The dispersibility of the inorganic filler was evaluated by the relative density of the heat dissipation sheet. In the case where the inorganic filler has poor dispersibility, the relative density is decreased since the inorganic filler is aggregated to prevent the resin from wetting and spreading among the particles, leaving voids therein. In the case where the relative density of the heat dissipation sheet is 95% or more, the dispersibility of the inorganic filler is evaluated as good (A), and in the case where the relative density of the heat sheet is less than 95%, the dispersibility of the inorganic filler is evaluated as poor (B).

The relative density of the heat dissipation sheet was calculated according to the following expression. (Relative density) = (density of heat dissipation sheet)/(theoretical density of heat dissipation sheet)

The density of the heat dissipation sheet was measured by the Archimedes method. Specifically, the weight of the heat dissipation sheet in air and the weight of the heat dissipation sheet in water were measured with an electronic balance. The density was calculated according to the following expression. (Specific gravity of heat dissipation sheet) = (weight of heat dissipation sheet in air)/((weight of heat dissipation sheet in air)-(weight of heat dissipation sheet in water))×(density of water at temperature of weight measurement)

Further, the theoretical density of the heat dissipation sheet was calculated based on the blending ratio of the boron nitride and the silicone resin, assuming that the density of boron nitride was 2.28 g/cm³, and the density of the silicone resin was 0.98 g/cm³.

**Table 1**

| | | | | Copolymer 1 | Copolymer 2 |
|---|---|---|---|---|---|
| Unit A | (A-1) | Acrylic acid | % by mol | 48.4 | 67.7 |
| Unit B | (B-1) | 1,2,2,6,6-Pentamethyl-4-piperidyl methacrylate | | 1.6 | 2.3 |
| Unit C | (C-1) | α-Butyl-ω-(3-methacryloxypropyl)polydimethylsiloxane | | 50 | - |
| | (C-2) | α-Butyl-ω-(3-methacryloxypropyl)polydimethylsiloxane | | - | 30 |
| Weight average molecular weight of unit C | | | | 5,000 | 10,000 |
| Weight average molecular weight of copolymer | | | | 65000 | 85000 |

**Table 2**

| | | | Heat dissipation sheet 1 | Heat dissipation sheet 2 | Heat dissipation sheet 3 | Heat dissipation sheet 4 | Heat dissipation sheet 5 |
|---|---|---|---|---|---|---|---|
| | | | Example | Example | Comparative Example | Comparative Example | Comparative Example |
| Inorganic filler | Inorganic filler No. | | 1 | 2 | 3 | 4 | 5 |
| | Copolymer No. | | 1 | 1 | 2 | 3 | - |
| | Amount of copolymer blended *1 | part by mass | 2 | 5 | 2 | 2 | - |
| | Zeta potential | mV | -20.0 | -25.3 | -10.1 | -12.15 | -8.5 |
| | Specific surface area | g/m² | 43 | 43 | 43 | 43 | 43 |
| | Average particle diameter | µm | 3 | 3 | 3 | 3 | 3 |
| Heat dissipation sheet | Dispersibility of inorganic filler | - | A | A | B | B | B |
| *1: Amount per 2 parts by mass of boron nitride | | | | | | | |

It is understood from Examples that in the case where the zeta potential at a pH of 7 of the inorganic filler is -15 mV or less, the dispersibility of the inorganic filler in the heat dissipation sheet can be improved. On the other hand, it is understood from Comparative Examples that in the case where the zeta potential at a pH of 7 of the inorganic filler is more than -15 mV, the dispersibility of the inorganic filler in the heat dissipation sheet is deteriorated.

## Claims

1. An inorganic filler having a zeta potential of -15 mV or less at a pH of 7.

2. The inorganic filler according to claim 1, wherein the inorganic filler has a specific surface area of 0.1 to 20 m²/g.

3. The inorganic filler according to claim 1 or 2, wherein the inorganic filler has an average particle diameter of 0.1 to 150 µm.

4. The inorganic filler according to any one of claims 1 to 3, wherein the inorganic filler comprises a polymer having
a (meth)acrylic based monomer unit A having an anionic group,
a (meth)acrylic based monomer unit B having a cationic group, and
a (meth)acrylic based monomer unit C other than the (meth)acrylic based monomer unit A and the (meth)acrylic based monomer unit B, and
has a content of the polymer of 0.01 to 10% by mass.

5. The inorganic filler according to any one of claims 1 to 4, wherein the inorganic filler comprises at least one kind of an inorganic filler selected from the group consisting of aluminum oxide and boron nitride.

6. A heat dissipation member comprising the inorganic filler according to any one of claims 1 to 5, and a resin.

7. The heat dissipation member according to claim 6, wherein the resin is at least one kind of a resin selected from the group consisting of a silicone resin and an epoxy resin.

8. The heat dissipation member according to claim 6 or 7, wherein the heat dissipation member is a heat dissipation sheet.
